# EUROPEAN PATENT SPECIFICATION

(11) **EP 1 290 365 B1**
(45) Date of publication and mention of the grant of the patent: **09.11.2005**
(21) Application number: 01936614.5
(22) Date of filing: 24.05.2001
(51) Int. Cl.: F16J 15/32, F16J 15/34

(54) **SEAL**
DICHTUNG
JOINT

(30) Priority: 24.05.2000 GB 0012559
(43) Date of publication of application: 12.03.2003
(73) Proprietor: Trelleborg Sealing Solutions UK Limited, Gloucester GL20 8JS (GB)
(72) Inventor: SLEIGH, Neville John Harper, Tewkesbury, Gloucestershire GL20 8BQ (GB)
(74) Representative: Hogg, Jeffery Keith
(86) International application number: PCT/GB2001/002301
(87) International publication number: WO 2001/090610

(56) References cited:
- GB-A- 602 792
- GB-A- 2 259 740
- US-A- 2 316 941

## Description

### Technical Field

The invention relates to a seal and the manufacture thereof. In particular, the invention relates to a seal between relatively rotatable parts.

GB602792 discloses a rotary seal comprising an annular carrier and a flexible sealing ring which is secured at one of its radial edges to the carrier by a separate fastening ring.

GB2259740 discloses a rotary seal comprising an annular carrier and a flexible sealing ring which is secured at one of its radial edges to the carrier by opposed portions of the carrier which are crimped together to grip said one radial edge of the sealing ring.

### Disclosure of the Invention

According to a first aspect, the invention provides a rotary seal for forming a seal between first and second concentric surfaces that are relatively rotatable about a common axis, the rotary seal comprising a carrier adapted on one side to fit said first concentric surface and to carry an annular compressive sealing member to form a seal with the first concentric surface, and adapted on another side to carry a resilient sealing ring that extends therefrom so that it can be deflected by, and seal with, the second concentric surface, characterised in that the carrier is a single-piece component folded from sheet material consisting of an intermediate radially extending wall which, at one radial edge, is contiguous with an axial flange that extends axially from one side of the intermediate wall and to which the annular compressive sealing member is bonded, and which, at the other radial edge, is contiguous with a radial flange that extends radially alongside the intermediate wall on the other side from the axial flange so as to form a recess in which the resilient sealing ring is received and gripped axially by the radial flange and intermediate wall.

According to a second aspect, the invention provides a rotary seal for forming a seal between the end face of a shaft and an adjacent surface which extends laterally of the shaft axis, the rotary seal comprising a carrier adapted to fit the end of the shaft and a sealing ring with two radially spaced edges, the sealing ring being secured at a first edge to the carrier so that the sealing ring extends therefrom and can be deflected by, and seal with, said adjacent surface, characterised in that the carrier comprises a single-piece component folded from sheet material comprising a radial flange portion adapted to engage the end face of the shaft, and an axial wall portion adapted to engage and grip the circumference of the shaft, and in that said first edge of the sealing ring is adapted to be located around the circumference of the shaft against the axial wall portion and to extend towards said adjacent surface.

The invention thus provides a rotary seal which is particularly suited to use in a situation where there is only a relative small clearance between the surfaces between which the seal is to be established.

In a preferred embodiment, the carrier may comprise a metal ring with a recess to receive one edge of the sealing ring. The carrier may be folded or pressed or otherwise formed around the edge of the sealing ring.

The sealing ring may be supplemented by a second axially adjacent sealing ring, or a single split sealing ring may be used having two sealing lips. The or each sealing ring may be made of PTFE, may be shaped as a washer, or may be provided with hydrodynamic grooves.

Where the rotary seal comprises a sealing member, the sealing member may be made from rubber or an elastomer.

By way of example only, the invention will now be described with reference to the accompanying figures, in which:

### Description of the Drawings

Figure 1 shows an axial part section of a rotary seal according to a first embodiment of the invention;
Figure 2 is a similar view to that of Figure 1 showing the sealing ring in a different configuration;
Figure 3 shows an axial part section of a rotary seal according to a second embodiment of the invention having two sealing rings;
Figure 4 shows an axial part section of a rotary seal according to a third embodiment of the invention;
Figure 5 is a similar view to that of Figure 4 showing the sealing ring in a different configuration; and
Figure 6 shows an axial part section of a rotary seal according to a fourth embodiment of the invention.

### Description of Embodiments of the Invention

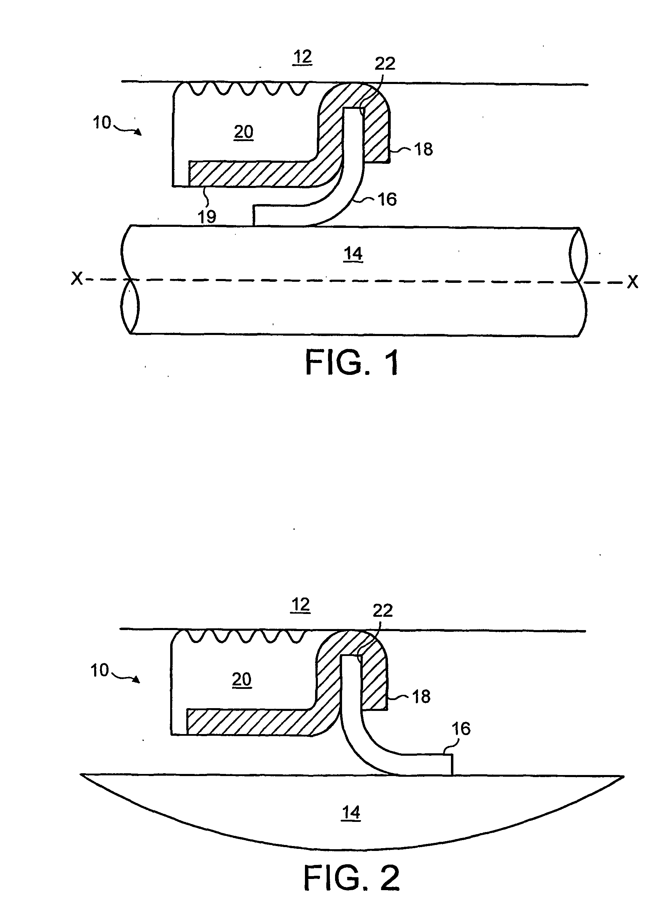

In Figure 1, a rotary seal 10 is shown installed in an annular gap between an outer cylindrical housing 12 and a shaft 14 which is concentric with and rotates about the axis of concentricity X-X. The ring seal 10 extends radially, relative to the axis of the annular gap between the shaft 14 and the housing 12.

The seal 10 comprises an annular sealing ring 16 which is composed of PTFE. The sealing ring 16 is held in an annular metal carrier 18 pressed from sheet metal and formed with a recess 22 to receive the outer edge of the sealing ring and grip it by crimping. The sealing ring 16 extends radially inwardly of the carrier 18 and is deflected axially by the shaft 14 so that one side of the sealing ring 16 makes sealing contact with the shaft 14.
The carrier 18 also comprises a flange 19 which extends axially within the annular gap. The flange 19 serves as a support upon which an annular sealing member 20 is formed. The sealing member 20 is comprised of rubber or elastomer and provides a sealing contact with the surface of the housing 12 to complete the sealing action between housing 12 and shaft 14.

The outer surface of the sealing member 20 may be shaped, for example, formed with circumferential ribs, to assist fitting within and sealing to the housing 12.

In Figure 1, the sealing ring 16 is shown deflected inwards of the flange 19 and sealing material 20. However, Figure 2 illustrates an alternative configuration in which the sealing ring 16 is shown deflected outwardly of the flange 19 and sealing material 20; the axial dimension of the rotary seal in use then being increased.

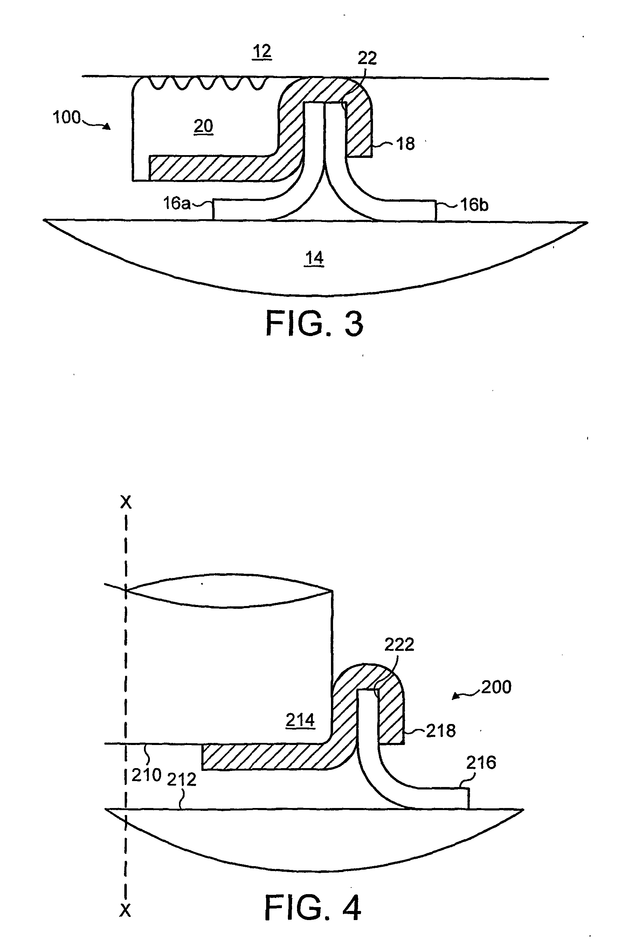

Figure 3 shows a rotary seal 100 accommodating two sealing rings 16a and 16b. Both of the sealing rings are crimped within the recess 22. The free ends of the sealing rings 16a and 16b extend in opposite directions over the surface of the shaft 14.

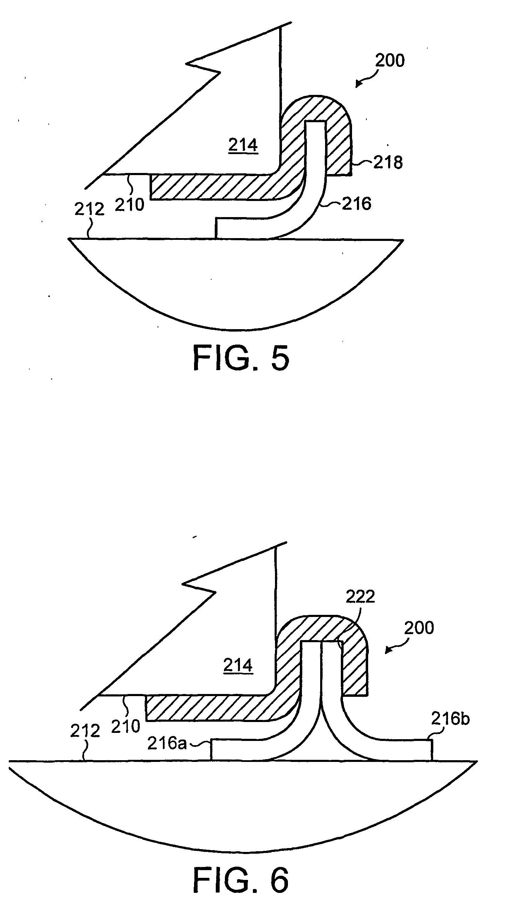

Whereas Figures 1 to 3 show annular rotary seals, Figures 4 to 6 illustrate seals between the end of a shaft and an adjacent surface extending substantially perpendicular to the shaft axis X-X.

In Figure 4, a rotary seal 200 forms a seal between an axial end face 210 of a rotating shaft 214 and an adjacent plane surface 212. The seal 200 comprises a metal carrier 218 mounted on the end of the shaft 214. The carrier 218 is formed as a sheet metal ring with an outer peripheral rim to fit around the circumferential side of the shaft and provide a recess 222 to receive an annular sealing ring 216 composed of PFTE. The recess 222 is crimped around the edge of the sealing ring 216. The free end of the sealing ring 216 deforms against the surface 212 and establishes the sealing action. Since the recess 222 holding the sealing ring is disposed around the circumferential side of the shaft 214, the sealing ring 216 is more easily accommodated in the limited space available when the sealing gap between the end 210 of the shaft and the adjacent surface 212 is relatively small.

In Figure 5, the arrangement differs from that shown in Figure 4 in that the free end of the sealing ring 216 now extends inwards of the end of the shaft 214 rather than outwards as in Figure 4.

In Figure 6, the arrangement differs from that shown in Figure 4 in that two sealing rings 216a and 216b, are fitted in the recess 222 and extend in opposite directions over the surface 212.

In the seals of Figures 4 to 6, the carrier 218 may be provided with an elastomeric layer between itself and the shaft 214, preferably around the circumferential side of the shaft only, to create a seal at that interface, instead of relying on contact between the carrier and the shaft 214 for that purpose.

## Claims

1. A rotary seal for forming a seal between first and second concentric surfaces (12,14) that are relatively rotatable about a common axis (x-x), the rotary seal comprising a carrier (18) adapted on one side to fit said first concentric surface (12) and to carry an annular compressive sealing member (20) to form a seal with the first concentric surface (12), and adapted on another side to carry a resilient sealing ring (16) that extends therefrom so that it can be deflected by, and seal with, the second concentric surface (14), **characterised in that** the carrier (18) is a single-piece component folded from sheet material consisting of an intermediate radially extending wall which, at one radial edge, is contiguous with an axial flange (19) that extends axially from one side of the intermediate wall and to which the annular compressive sealing member (20) is bonded, and which, at the other radial edge, is contiguous with a radial flange that extends radially alongside the intermediate wall on the other side from the axial flange so as to form a recess in which the resilient sealing ring (16) is received and gripped axially by the radial flange and intermediate wall.

2. A rotary seal as claimed in claim 1 in which the free edge of the sealing ring (16) is deflected inwards of the sealing member (20).

3. A rotary seal as claimed in any of the preceding claims in which a second sealing ring (16a, 16b) is secured to the carrier (18) to extend therefrom and form a seal with said second concentric surface (14).

4. A rotary seal as claimed in claim 3 in which the sealing rings (16a, 16b) extend radially from the carrier (18) and away from one another.

5. A rotary seal for forming a seal between the end face (210) of a shaft (214) and an adjacent surface (212) which extends laterally of the shaft axis, the rotary seal comprising a carrier (218) adapted to fit the end of the shaft (214) and a sealing ring (216) with two radially spaced edges, the sealing ring being secured at a first edge to the carrier (218) so that the sealing ring (216) extends therefrom and can be deflected by, and seal with, said adjacent surface (212), **characterised in that** the carrier (218) comprises a single-piece component folded from sheet material comprising a radial flange portion adapted to engage the end face (210) of the shaft (214), and an axial wall portion adapted to engage and grip the circumference of the shaft (214), and **in that** said first edge of the sealing ring (216) is adapted to be located around the circumference of the shaft (214) against the axial wall portion and to extend towards said adjacent surface (212).

6. A rotary seal as claimed in claim 5 in which the axial wall portion of the carrier (218) is contiguous with an outer flange spaced away from it to define a recess in which the first edge of the sealing ring (216) is received and gripped by the outer flange and axial wall portion.

7. A rotary seal as claimed in any one claim 5 to 6 in which the sealing ring (216) is adapted to extend towards the adjacent surface (212) and inwardly of the shaft as it is deflected by and seals with the adjacent surface (212).

8. A rotary seal as claimed in any one of claims 5 to 7 in which a sealing member is attached to the carrier to seal with the shaft (214).

9. An assembly including a rotary seal as claimed in any one of the preceding claims.

## Patentansprüche

1. Eine drehbare Dichtung zur Bildung einer Dichtung zwischen einer ersten und einer zweiten konzentrischen Oberfläche (12, 14), die relativ zu einer gemeinsamen Achse (X-X) drehbar sind, die drehbare Dichtung ferner eine Halterung (18) umfasst, die auf einer Seite so angepasst ist, dass sie genau zu der ersten konzentrischen Oberfläche (12) angepasst ist, und ein ringförmiges zusammenpressbares Dichtungselement (20), um eine Dichtung mit der ersten konzentrischen Oberfläche (12) zu formen, und ferner so angepasst ist, dass sie auf der anderen Seite einen elastischen Dichtungsring (16) trägt, der sich daran ausdehnen kann und zwar der Art, dass die zweite konzentrische Oberfläche (14) ebenfalls von der Dichtung abgedichtet werden kann, **dadurch gekennzeichnet, dass** die Halterung (18) ein einstückiges aus Blechmaterial gefaltetes Bauelement ist, bestehend aus einer radial dazwischen liegenden Seitenwand, wobei eine radiale Kante an einem axialen Flansch (19) angrenzt, der sich axial von einer Seite der dazwischen liegenden Seitenwand und dem ringförmigen zusammenpressbaren Dichtungselement (20) erstreckt und verbunden ist, und ferner die andere radiale Kante mit einem radialen Flansch, der sich längsseits der zwischen liegenden Seitenwand und der anderen Seite des axialen Flansches erstreckt, und zwar derart, dass eine Aussparung gebildet wird, in der der elastische Dichtungsring (16) eingebettet ist und axial durch den radialen Flansch der zwischen liegenden Seitenwand gehalten ist.

2. Eine drehbare Dichtung nach Anspruch 1, **dadurch gekennzeichnet, dass** die freie Kante des Dichtungsrings (16) in Richtung des Dichtungselements (20) ausgelenkt ist.

3. Eine drehbare Dichtung nach einem der vorher genannten Ansprüche, **dadurch gekennzeichnet, dass** ein zweiter Dichtungsring (16a, 16b) an der Halterung (18) befestigt ist, und der sich daran von der besagten zweiten, konzentrischen Oberfläche (14) entlang erstreckt.

4. Eine drehbare Dichtung nach Anspruch 3, **dadurch gekennzeichnet, dass** die Dichtungsringe (16a, 16b) sich radial von dem Träger (18) in jeweils entgegen gesetzter Richtung voneinander erstrecken.

5. Eine drehbare Dichtung zur Bildung einer Dichtung zwischen der Stirnfläche (210) eines Schaftes (214) und einer angrenzenden Oberfläche (212), die sich seitlich von der Schaftachse erstreckt, wobei die drehbare Dichtung eine Halterung (218) umfasst, die so angepasst ist, dass sie in das Ende des Schaftes (214) und des Dichtungsrings (216) mit zwei radialen regelmäßigen Kanten passt, und der Dichtungsring mit der ersten Kante der Halterung (218) gesichert ist, so dass der Sicherungsring (216) sich daran ausdehnen und durch die Dichtung mit der besagten angrenzenden Oberfläche (212) ausgelenkt werden kann, **dadurch gekennzeichnet, dass** die Halterung (218) ein aus einem Blechmaterial gefaltetes, einstückiges Bauelement umfasst, das ein radiales Flanschteilstück umfasst, das geeignet ist, an die Stirnfläche (210) des Schaftes (214) und des axialen Seitenwandteilstücks verbindend anzugreifen, um einen festen Griff auf die gesamte Umfangslänge des Schaftes (214) auszuüben, wobei die vorgenannte erste Kante des Dichtungsrings (216) so angepasst ist, dass sie rundherum um die gesamte Umfangslänge des Schaftes (214) und gegen das axiale Teilstück der Seitenwand angeordnet ist und sich entgegen der vorgenannten angrenzenden Oberfläche (212) erstreckt.

6. Eine drehbare Dichtung nach Anspruch 5, **dadurch gekennzeichnet, dass** das axiale Seitenwandteilstück der Halterung (218) mit dem äußeren Flanschraum von ihm entfernt angrenzend ausgebildet ist, um eine Aussparung zu definieren, in der die erste Kante des Dichtungsrings (216) eingebettet und durch den äußeren Flansch und das axiale Seitenwandteilstück gehalten ist.

7. Eine drehbare Dichtung nach einem der Ansprüche 5 oder 6, **dadurch gekennzeichnet, dass** sich der Dichtungsring (216) entgegen der angrenzenden Oberfläche (212) und einwärts des Schaftes erstreckt und der Dichtungsring (216) durch die Dichtungen der angrenzenden Oberfläche (212) abgelenkt wird.

8. Eine drehbare Dichtung nach einem der Ansprüche 5 bis 7, **dadurch gekennzeichnet, dass** das Dichtungselement an der Halterung der Dichtung des Schaftes (214) befestigt ist.

9. Eine Anordnung, die eine rotierende Dichtung nach einem oder mehreren der vorgenannten Ansprüche umfasst.

## Revendications

1. Joint rotatif d'étanchéité destiné à former un joint d'étanchéité entre des première et seconde surfaces concentriques (12, 14) qui peuvent tourner l'une par rapport à l'autre autour d'un axe commun (x-x), le joint rotatif d'étanchéité comprenant un support (18) destiné d'une part à s'ajuster contre la première surface concentrique (12) et à porter un organe annulaire d'étanchéité (20) fonctionnant par compression pour la formation d'un joint d'étanchéité avec la première surface concentrique (12), et destiné d'autre part à supporter une bague élastique d'étanchéité (16) qui en dépasse de manière qu'elle puisse être fléchie par la seconde surface concentrique (14) en coopérant de façon étanche avec celle-ci, **caractérisé en ce que** le support (18) est un élément en une seule pièce plié à partir d'un matériau en feuille constitué d'une paroi intermédiaire qui s'étend radialement, qui, à un bord radial, est contiguë à un flasque axial (19) qui s'étend axialement depuis un côté de la paroi intermédiaire et auquel est lié l'organe annulaire d'étanchéité (20) fonctionnant par compression et qui, à l'autre bord radial, est contiguë à un flasque radial qui s'étend radialement le long de la paroi intermédiaire de l'autre côté du flasque axial pour former une cavité dans laquelle est logée et saisie axialement la bague élastique d'étanchéité (16) par le flasque radial et la paroi intermédiaire.

2. Joint rotatif d'étanchéité selon la revendication 1, dans lequel le bord libre de la bague d'étanchéité (16) est dévié vers l'intérieur de l'organe d'étanchéité (20).

3. Joint rotatif d'étanchéité selon l'une des revendications précédentes, dans lequel une seconde bague d'étanchéité (16a, 16b) est fixée au support (18) afin qu'elle s'étende depuis celui-ci et forme un joint d'étanchéité avec la seconde surface concentrique (14).

4. Joint rotatif d'étanchéité selon la revendication 3, dans lequel les bagues d'étanchéité (16a, 16b) s'étendent radialement depuis le support (18) en s'écartant l'une de l'autre.

5. Joint rotatif d'étanchéité destiné à former un joint d'étanchéité entre la face d'extrémité (210) d'un arbre (214) et une surface adjacente (212) qui s'étend latéralement par rapport à l'axe de l'arbre, le joint rotatif d'étanchéité comprenant un support (218) destiné à s'ajuster sur l'extrémité de l'arbre (214) et une bague d'étanchéité (216) ayant deux bords espacés radialement, la bague d'étanchéité étant fixée à un premier bord sur le support (218) de manière que la bague d'étanchéité (216) s'étende depuis celui-ci et puisse être déviée par la surface adjacente (212) tout en étant en coopération étanche avec elle, **caractérisé en ce que** le support (218) comporte un élément en une seule pièce plié à partir d'un matériau en feuille qui comprend une partie de flasque radial destinée à coopérer avec la face d'extrémité (210) de l'arbre (214), et une partie de paroi axiale destinée à coopérer avec la circonférence de l'arbre (214) et à serrer celle-ci, et **en ce que** le premier bord de la bague d'étanchéité (216) est destiné à être placé autour de la circonférence de l'arbre (214) contre la partie de paroi axiale et à s'étendre vers la surface adjacente (212).

6. Joint rotatif d'étanchéité selon la revendication 5, dans lequel la partie de paroi axiale du support (218) est contiguë à un flasque externe placé à distance d'elle pour la délimitation d'une cavité dans laquelle le premier bord de la bague d'étanchéité (216) est logé et serré par le flasque externe et la partie de paroi axiale.

7. Joint rotatif d'étanchéité selon l'une des revendications 5 et 6, dans lequel la bague d'étanchéité (216) est destinée à s'étendre vers la surface adjacente (212) et vers l'intérieur de l'arbre lorsqu'elle est fléchie par la surface adjacente (212) et coopère de façon étanche avec elle.

8. Joint rotatif d'étanchéité selon l'une des revendications 5 à 7, dans lequel un organe d'étanchéité est fixé au support pour assurer l'étanchéité avec l'arbre (214).

9. Ensemble comprenant un joint rotatif d'étanchéité selon l'une quelconque des revendications précédentes.
